Europäisches Patentamt

European Patent Office (11) Numéro de publication: **0 022 397**

Office européen des brevets **B1**

(12) **FASCICULE DE BREVET EUROPEEN**

(45) Date de publication du fascicule du brevet: **13.02.85** (51) Int. Cl.⁴: **B 41 J 3/512, G 06 K 1/20**

(21) Numéro de dépôt: **80400952.0**

(22) Date de dépôt: **25.06.80**

(54) **Procédé de frappe de texte avec enregistrement codé conjoint pour exploitation ultérieure, et machine à écrire pour la mise en oeuvre du procédé.**

(30) Priorité: **27.06.79 FR 7916525**

(43) Date de publication de la demande:
**14.01.81 Bulletin 81/02**

(45) Mention de la délivrance du brevet:
**13.02.85 Bulletin 85/07**

(84) Etats contractants désignés:
**BE CH DE GB IT LI LU NL SE**

(56) Documents cités:
**EP-A-0 011 721**
**US-A-3 656 426**
**US-A-3 765 603**
**US-A-3 915 086**
**US-A-4 016 365**

**IBM TECHNICAL DISCLOSURE BULLETIN, vol.
23, no. 1, juin 1980, NEW YORK (US), J.E.
DREJZA: "Electroerosion data storage system",
pages 147,148**

(73) Titulaire: **Gascuel, Jean-Paul**
**6, Rue du Val-de-Grâce**
**F-75005 Paris (FR)**
(73) Titulaire: **Rivaillier, Jacques**
**26, rue Mars Cressely**
**F-78470 Saint-Rémy-les-Chevreuses (FR)**

(72) Inventeur: **Gascuel, Jean-Paul**
**6, Rue du Val-de-Grâce**
**F-75005 Paris (FR)**
Inventeur: **Rivaillier, Jacques**
**26, rue Mars Cressely**
**F-78470 Saint-Rémy-les-Chevreuses (FR)**

(74) Mandataire: **CABINET BONNET-THIRION**
**95 Boulevard Beaumarchais**
**F-75003 Paris (FR)**

Courier Press, Leamington Spa, England.

## Description

L'invention se rapporte à un procédé de frappe d'un texte sur une feuille support, avec un enregistrement codé conjoint, du texte, en sorte que le texte puisse faire l'objet d'une exploitation ultérieure, reproduction ou extraction et traitement de données, par relecture de l'enregistrement codé. L'invention a trait également à une machine à écrire prévue pour la mise en oeuvre du procédé.

On connaît des machines à écrire dans lesquelles l'impression du texte en caractères graphiques est accompagnée de l'enregistrement codé du texte sur un support distinct, bande perforée ou bande magnétique notamment. Par caractères graphiques on entend les caractères alphanumériques, de ponctuation, et symboliques d'usage général et classique, et par enregistrement codé, l'enregistrement de signaux numériques en correspondance avec les caractères graphiques suivant un code, généralement normalisé, tel que le code A S C II par example. Dans les machines à écrire de ce genre il est fréquent que les signaux numériques codés émis par la frappe des touches du clavier au cours de la composition d'une ligne soient rangés dans une mémoire intermédiaire avec autant d'emplacements qu'une ligne de texte comporte d'emplacements de caractères, tandis qu'un afficheur associé à un moyen de lecture de la mémoire intermédiaire fait apparaître la teneur de la ligne au cours de sa composition. En fin de frappe de ligne, le contenu de la mémoire intermédiaire est transféré dans une mémoire secondaire, couplée à un chariot d'impression et à un moyen d'écriture sur le support à enregistrement codé, et la lecture de la mémoire secondaire provoque simultanément l'impression graphique et l'enregistrement codé, tandis que la mémoire intermédiaire est disponible pour la frappe de la ligne suivante.

Ce genre de machine à écrire se prête bien à la composition de textes dont la mise au point nécessite des corrections successives, et à l'archivage de ces textes, ainsi qu'à la préparation de textes "passe partout" comportant des fenêtres destinées à des notations particularisées. Par contre les classements des textes graphiques et des supports enregistrés codés sont nécessairement distincts, ce qui peut compliquer les recherches de correspondance. En outre le texte en impression graphique, susceptible d'être diffusé, n'est pas plus exploitable que tout texte graphique courant, tandis que le support enregistré n'est qu'un document d'archive qui ne peut aisément être diffusé, et n'est d'ailleurs exploitable que sur des machines compatibles avec la machine à écrire d'origine.

Par ailleurs, si des machines ont été réalisées pour être capables de traduire en signaux numériques enregistrables un texte graphique classique, la compatibilité avec les divers types de caractères graphiques utilisés nécessite des processus de reconnaissance complexes qui ont pour résultat des prix tels que ces machines ne sont utilisables que pour des applications très particulières.

On connaît également des terminaux d'ordinateur munis de claviers et de chariots d'impression qui utilisent des feuilles supports avec, à côté d'un espace réservé à l'impression graphique, portant dans une marge une piste, généralement magnétique, pour l'enregistrement de signaux numériques codés, avec lequel le texte imprimé est en correspondance. Mais ces feuilles supports constituent en fait des éléments de mémoire périphérique utilisables uniquement en liaison avec un ordinateur associé au terminal, sur lesquels le texte imprimé ne sert qu'à exprimer en clair une partie des informations portées sur la piste codée, et qui sont nécessaires pour identifier la teneur des informations codées. Les feuilles supports ne constituent pas des documents susceptibles de diffusion, et l'établissement de documents à diffuser se fait normalement sans enregistrement conjoint codé, à partir d'éléments prélevés sur une ou plusieurs feuilles supports à piste, et convenablement traités par l'ordinateur. On comprendra que de tels terminaux d'ordinateurs n'apportent aucune solution avantageuse au problème de l'exploitation ultérieure de documents susceptibles de diffusion, par rapport aux machines à écrire précédemment évoquées, et qu'au contraire leur utilisation dans ce rôle aurait pour résultat un sous-emploi redhibitoire des capacités de l'ordinateur.

L'invention a pour but de réaliser un procédé de frappe de texte sur une feuille support avec enregistrement codé conjoint en vue d'une exploitation ultérieure par relecture où l'enregistrement codé est imprimé sur la feuille support du texte graphique, et en corrélation d'emplacement.

L'invention a également pour but de réaliser un procédé de frappe de texte où l'enregistrement codé d'une ligne de texte est imprimé dans une marge en regard de la ligne.

L'invention a encore pour but de réaliser un tel procédé de frappe de texte où l'enregistrement codé comporte des éléments de rythme de lecture.

La demande EP—A—0 011 721, révélée par le rapport de recherche, est citée ici comme document interférent (article 54. 3 et 4 CBE). Elle n'a pas été retenue au titre de la nouveauté et ne saurait être prise en compte pour l'appréciation de l'activité inventive, mêm s'il décrit un procédé de frappe avec enregistrement codé conjoint.

A ces effets l'invention propose un procédé de frappe de texte sur une feuille support, avec enregistrement codé conjoint permettant une relecture automatique pour exploitation ultérieure, où l'on enregistre dans une première mémoire une suite limitée de signaux numériques, chacun en correspondance avec un caractère graphique suivant un code de base, la mémoire étant lue en permanence et son contenu affiché en caractères graphiques, on transfère dans une seconde mémoire le contenu de la première en réponse à un signal de fin de suite, et on imprime en graphique le contenu de la seconde mémoire en réponse à une première lecture de la seconde mémoire, procédé caractérisé en ce qu'on imprime en caractères codés en numérique à la suite de l'impression graphique, en réponse à une seconde lecture de la seconde mémoire.

Comme, aux séquences temporelles de lecture de la seconde mémoire correspondent des séquences de déplacement d'impression transversalement à la feuille support, l'impression codée résultant de la seconde lecture sera en corrélation de position avec l'impression de la suite de caractères graphiques, résultant de la première lecture, sur la feuille support.

De préférence la suite limitée de signaux numériques correspondra à une ligne de texte, de sorte qu'un signal de fin de ligne déclenche successivement la première lecture, la seconde lecture, et la mise en place de la feuille support pour l'impression de la ligne suivante. Ainsi, en regard de chaque ligne imprimée en caractère graphique, l'impression codée correspondante sera disposée dans la marge.

De façon préférée, le code de base est constitué, par caractère graphique, d'un mot distinct à sept chiffres binaires plus un chiffre de parité, et l'impression comprend par mot un alignement de neuf positions de point transversalement à la direction générale de frappe, huit emplacements correspondant respectivement aux huit chiffres binaires de mot et le neuvième étant occupé alternativement dans la suite par 0 et 1 en sorte de définir une base de rythme de relecture. Dans une lecture optique par balayage dans la direction générale de frappe et acquisition simultanée des points du mot, la ligne de neuvième position définit une fréquence de synchronisation de lecture.

Sous un autre aspect l'invention propose une machine à écrire, destinée à la frappe de textes avec enregistrement conjoint codé permettant une relecture automatique pour exploitation ultérieure, et comportant un clavier avec des touches de caractères graphiques adaptées à émettre chacune par enfoncement un signal numérique correspondant au caractère auquel la touche est affectée, et des touches de fonction dont au moins une touche de fin de ligne, une première mémoire couplée au clavier et adaptée à enregistrer une suite de signaux numériques dans l'ordre d'émission par les touches de caractères, un afficheur en caractères graphiques couplé à la première mémoire et adapté à afficher le contenu de celle-ci une seconde mémoire chargée avec le contenu de la première en réponse à un signal émis par la touche de fin de ligne et couplée à un moyen de lecture séquentielle, et un chariot à tête d'impression adapté à se déplacer par avances discrètes suivant une ligne en travers d'une feuille support de texte et à effectuer une impression de ligne en caractères graphiques en réponse à la mise en action dudit moyen de lecture à la suite du chargement de la seconde mémoire, la fin de lecture déterminant le retour de chariot et l'avance d'un interligne de la feuille support, machine caractérisée en ce que ledit moyen de lecture est adapté, en coopération avec le chariot, à effectuer une première lecture traduite par le chariot en caractères graphiques, puis une seconde lecture inscrite par le chariot en code de signal numérique, le retour de chariot et l'avance de la feuille support étant déclenchés par le moyen de lecture en fin de seconde lecture.

De préférence le chariot comporte une tête d'impression dite mosaïque à lignes et colonnes associées à une matrice de codage adaptée à appliquer à chaque colonne de la tête d'impression un caractère codé en correspondance avec un signal numérique. Ces têtes d'impression mosaïque, utilisées pour des imprimantes rapides, permettent, outre la vitesse d'impression, la composition d'un enregistrement codé très compact et aisément lisible par procédé optique.

Les caractères graphiques peuvent être imprimés, soit par une tête d'impression graphique connue, comme une tête à boule ou à couronne, soit par la tête mosaïque couplée, pour l'impression graphique, à un générateur de signaux de commande d'impression graphique connu, qui assure la correspondance entre un signal numérique codé représentatif d'un caractère, et une répartition des points imprimés au croisement des lignes et colonnes de la matrice, telle que le caractère soit reconstitué.

Les caractéristiques et avantages de l'invention ressortiront d'ailleurs de la description qui va suivre, à titre d'exemple, en référence aux dessins annexés, dans lesquels:

la figure 1 représente schématiquement la disposition des éléments d'une machine à écrire selon l'invention;

la figure 2 représente, à grande échelle, un exemple d'impression codée;

la figure 3 représente une tête mosaïque pour l'impression graphique et codée;

la figure 4 est un schéma de lecteur de ligne d'impression codée formant base de rythme de lecture;

la figure 5 est un graphique de fonctionnement du lecteur de la figure 4.

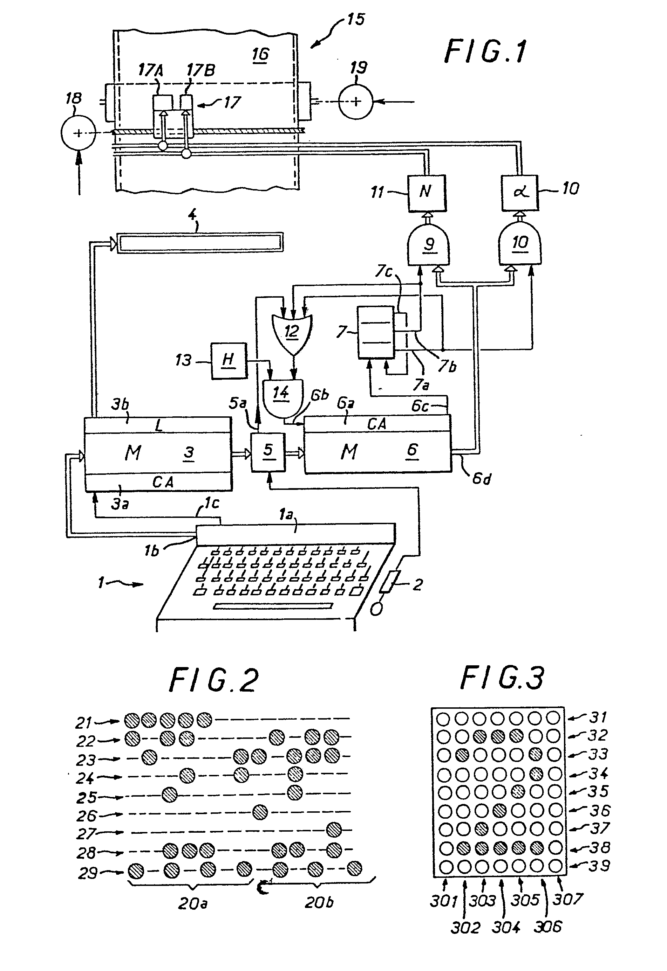

Selon la forme de réalisation choisie et représentée figure 1, une machine à écrire comporte un clavier 1 classique, avec un codeur 1*a* associé émettant sur la sortie 1*b* un signal numérique correspondant au caractère affecté à chaque touche dans le code A S C I I, en réponse à l'enfoncement de chaque touche, et sur la sortie 1*c* une impulsion à chaque enfoncement de touche. Le clavier comporte également une touche 2 de fin de ligne. Au clavier 1 est associée une première mémoire 3, comportant autant d'emplacements de signaux numériques qu'une ligne peut comporter de caractères. La mémoire 3 reçoit sur une entrée d'enregistrement les signaux numériques émis sur la sortie 1*b*, et comporte un compteur d'adresses 3*a* qui reçoit les impulsions émises par la sortie 1*c* du clavier 1, en sorte que les signaux numériques émis sur la sortie 1*b* soient logés dans un emplacement de mémoire correspondant au rang du caractère dans la ligne. On comprendra que, bien que ce ne soit pas représenté, une touche de retour arrière vient décompter sur le compteur d'adresses 3*a* pour permettre des corrections. La mémoire 3 comporte également un dispositif de lecture 3*b* couplé à un afficheur graphique 4, et qui balaye le contenu de la mémoire 3 dans les intervalles entre les enregistrements de signaux numériques, en sorte que l'afficheur 4 reproduise à tout moment la ligne dans son état actuel de composition.

La mémoire 3 est en outre couplée à une seconde mémoire 6, de même capacité que la mémoire 3, à travers une organe de transfert 5, commandé par la touche 2. La mémoire 6 comporte un compteur d'adresses 6*a* avec une entrée de comptage 6*b* et une sortie de débordement 6*c*, reliée à l'entrée de comptage d'un compteur cyclique 7, à trois sorties, la première reliée à une première entrée d'une porte "ET" 8, la deuxième à l'entrée d'une première entrée d'une porte "ET" 9, et la troisième commandant le retour à zéro du compteur 7. En outre les première et deuxième sorties du compteur 7, ainsi qu'une sortie 5*a* de l'organe de transfert 5, attaquent conjointement les entrées d'une porte "OU" 12, dont la sortie attaque une entrée d'une porte "ET" 14 dont la seconde entrée est reliée à une horloge 13, tandis que la sortie de la porte "ET" 14 attaque l'entrée de comptage 6*b* du compteur d'addresses 6*a*. .

Les portes "ET" 8 et 9 reçoivent conjointement sur une seconde entrée les signaux numériques qui apparaissent sur la sortie de lecture 6*d* de la seconde mémoire 6, et sont reliées en sortie respectivement à des dispositifs de codage 10, 11 capables, en réponse à un signal codé, d'émettre un signal de sortie codé exploitable par une tête d'impression, respectivement en graphique et codé numérique.

La machine à écrire comporte en outre un dispositif d'impression 15 dans son ensemble, sur une feuille support 16, comprenant un chariot 17 avec une tête d'impression graphique 17*a*, attaquée par le dispositif de codage 10, et une tête d'impression codée 17*b*, attaquée par le dispositif de codage 11, un moteur pas à pas 18 d'avance du chariot, et un moteur pas à pas 19 d'avance de la feuille support 16. Les dispositifs d'avance de chariot et de feuille support sont classiques, et ne seront donc pas décrits dans leur constitution ou leurs moyens de commande.

La tête d'impression 17*b* est une tête dite "mosaïque" à neuf lignes et sept colonnes, prévue pour imprimer un motif de points situés à l'intersection des lignes et des colonnes d'une matrice 9×7. Chaque point, représenté par une adresse qui identifie la ligne et la colonne dont l'intersection définit le point, est obtenu par application d'un ruban à encrage transfert sur la feuille support en résultat de la saillie d'une aiguille disposée dans la tête. Celle-ci comporte 9 aiguilles de lignes, alignées dans la direction d'une colonne, et commandée individuellement par la sous-adresse de ligne correspondante. Les 7 colonnes sont explorées en succession, le bloc d'aiguilles avançant d'une largeur de colonne entre chaque exploration. Comme il sera expliqué en détail plus loin, chaque colonne correspond au codage d'un caractère.

La tête d'impression 17*a* est une tête d'impression graphique classique, du type dit communément "à boule", qui porte en relief l'ensemble des caractères graphiques nécessaires. Les signaux numériques de commande ont pour effet d'orienter la tête en sorte que le caractère graphique correspondant soit en regard de l'emplacement de frappe sur la feuille support, et soit pressé contre celle-ci par l'intermédiaire du ruban à encrage transfert.

Le fonctionnement de la machine à écrire peut se décrire comme suit:

Lors de la composition d'une ligne, la frappe des touches du clavier 1 provoque l'émission successive des signaux numériques correspondants suivant le code A S C I I aux caractères successifs frappés, ces signaux numériques venant s'enregistrer dans les emplacements successifs de la mémoire 3, par le jeu du compteur d'adresses 3*a*. Bien entendu les espaces sont pris en compte par le compteur d'adresses, tandis que l'emplacement de mémoire reste vide. Le dispositif de lecture 3*b* balaye en permanence, dans les intervalles entre les émissions de signaux par le clavier 1, le contenu de la mémoire 3, en sorte que l'afficheur 4 présente en permanence à l'opérateur la ligne en composition dans son état actuel. Par commande en décomptage du compteur d'adresses 3*a*, analogue à une commande de retour arrière de chariot d'une machine classique, il est possible de modifier les enregistrements antérieurs, c'est-à-dire de corriger les erreurs de frappe.

Lorsque l'opérateur a composé sa ligne de façon satisfaisante, il appuie sur la touche 2 de fin de ligne, de sorte que l'organe transfert 5 rendu actif met en communication les mémoires 3 et 5, et envoie un signal de déblocage à la porte "OU" 12, qui transmet ce signal à la porte "ET" 14, qui devient passante pour les signaux d'horloge 13 en direction de l'entrée de comptage 6*b* du compteur d'adresses 6*a*. Les signaux enregistrés dans la mémoire 3 viennent alors se transférer, par emplacements successifs, dans la mémoire 6.

Lorsque le contenu de tous les emplacements de la mémoire 3 se trouvent enregistrés en mémoire 6, le compteur d'adresses 6a fait apparaître sur sa sortie de débordement 6c un signal qui vient incrémenter le compteur cyclique 7. Simultanément bien entendu l'organe de transfert 5 est inactivé, et le contenu de la mémoire 3 annulé, pour être vierge avant la composition de la ligne suivante.

L'incrémentation du compteur 7 a pour résultat de faire apparaître sur la première sortie 7a un signal qui rend passante la porte "ET" 8 pour les signaux numériques contenus dans la mémoire 6. Ce signal sur la sortie 7a est également adressé à la porte "OU" 12 pour rendre passante la porte "ET" 14 pour les signaux d'horloge 13 en direction du compteur d'adresses 6a, en sorte que les signaux numériques enregistrés dans les emplacements successifs de la mémoire 6 parviennent au dispositif de codage 10 pour commander la tête d'impression 17a, et donc imprimer en caractères graphiques successifs la ligne composée antérieurement. Il va sans dire que le moteur 18 commande l'avance pas à pas du chariot 17, le rythme d'avance réagissant sur le rythme de l'horloge 13. L'impression graphique étant complétée, la compteur d'adresses 6a émet sur sa sortie de débordement 6c un signal qui vient incrémenter le compteur 7, en sorte qu'un signal apparaisse sur sa sortie 7b. La porte "ET" 8 devient bloquante et la porte "ET" 9 devient passante, tandis qu'une nouvelle lecture par emplacements successifs de la mémoire 6 est déclenchée par le jeu de la porte "OU" 12, la porte "ET" 14 et l'horloge 13. Les signaux numériques lus successivement sont appliqués au dispositif de codage 11, qui commande la tête d'impression codée 17b, par colonnes successives. Chaque fois qu'une colonne a été imprimée, le moteur 18 avance le chariot d'1/7 de pas. Bien entendu là encore le rythme d'horloge 13 est contrôlé par l'exécution des manoeuvres successives d'impression. L'impression codée va se trouver dans la marge droite de la feuille support, à hauteur de la ligne en caractères graphiques correspondants, et occupera une largeur réduite de sept fois par rapport â la ligne graphique, soit la largeur de 12 caractères pour une ligne de 84 caractères graphiques.

La seconde lecture de la mémoire 6 achevée, un signal de débordement apparaît sur la sortie 6c du compteur d'adresses 6a, avec pour résultat la remise à zéro du compteur 7 par le bouclage de la troisième sortie avec l'entrée de commande de remise à zéro, et le blocage des portes "ET" 8, 9 et 14. L'apparition fugitive d'un signal sur la sortie 7c a également pour effet de commander le retour de chariot 17 en début de ligne, et, par action du moteur 17, l'avance d'un interligne de la feuille support. Ces commandes sont classiques pour la mise en oeuvre des imprimantes, et n'ont pas besoin d'être décrites ici pour qu'un homme du métier puisse les concevoir et les réaliser.

La disposition de l'impression codée est représentée figure 2, pour deux positions successives 20a et 20b de la tête d'impression codée (17b de la figure 1), chaque position comprenant 7 colonnes et 9 lignes référencées de 21 à 29. Dans chaque colonne les lignes 21 à 27 correspondent dans l'ordre aux sept chiffres binaires du caractère en code A S C I I, la huitième ligne étant réservée à un chiffre de partié, en sorte que la somme des chiffres 1 dans le nombre binaire soit paire, disposition classique pour éliminer les signaux correspondant à des erreurs de lecture ou d'impression. Un conçoit qu'une tête de lecture avec autant de détecteurs photoélectriques que l'impression codée compte de lignes, disposés suivant une colonne, sera capable par balayage de gauche à droite de restituer des signaux numériques correspondant exactement aux signaux émis par le clavier, en sorte, soit de restituer le texte graphique à l'identique, soit même, en couplage avec un ordinateur d'exploiter des données du texte, en extraire des passages significatifs, et toutes opérations convenables.

La ligne 29 n'a pas de signification corrélée avec les lignes 21 à 28, mais est constituée alternativement de 1 et de 0 dans l'ordre de succession des colonnes, dans le but de constituer une base de temps auxiliaire pour la lecture, comme il sera expliqué plus loin. Le dispositif de codage 11 (figure 1) élabore donc la ligne 29, non en réponse aux signaux numériques lus dans la mémoire, mais en réponse au rythme de lecture impression codée, à travers un diviseur par deux.

Pour simplifier le chariot 17 de la figure 1 et augmenter la vitesse d'impression graphique, on peut équiper le chariot 17 d'une seule tête d'impression, de type mosaïque 17b, et supprimer la tête graphique 17a. Le dispositif de codage 10 est alors un transcodeur tel qu'en réponse à un signal numérique représentant en code A S C I I un caractère graphique, le transcodeur émette une série d'adresses en direction de la tête mosaïque, chaque adresse correspondant à un point d'une représentation matricielle du caractère. On a représenté figure 3 une représentation matricielle du caractère 2, avec les adresses 302—33, 302—38, 303—32, 303—37, 303—38, 304—32, 304—36, 304—38, 305—32, 305—35, 308—32, 306—33, 306—34 et 306—38. De tels transcodeurs sont classiques, et disponibles sur le marché en circuits intégrés.

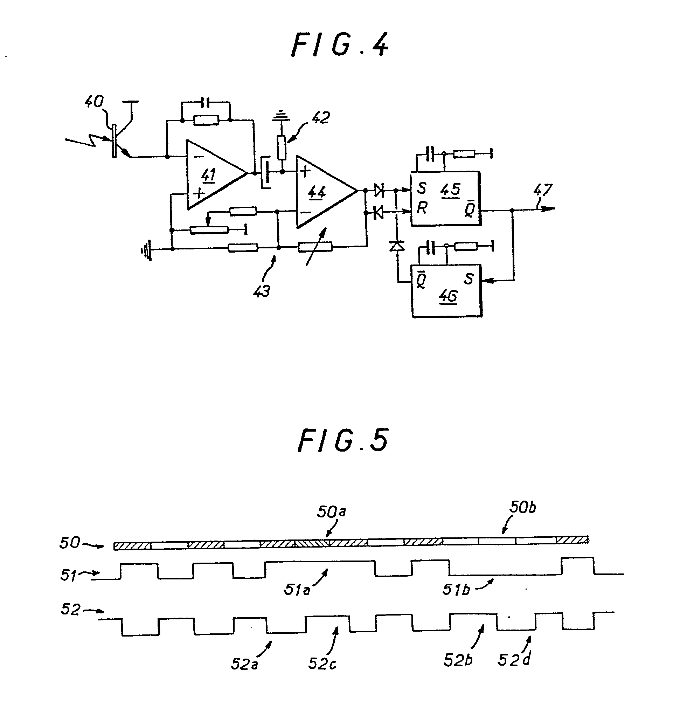

Le dispositif représenté figure 4, qui ne fait pas normalement partie de la machine à écrire, est destiné à la lecture de la neuvième ligne de l'impression codée (ligne 29 de la figure 2) en sorte de reconstituer une base de temps malgré des défauts d'impression de cette neuvième ligne. Un phototransistor 40, sensible à la lumière réfléchie par la neuvième ligne au cours de la lecture, est branché à l'entrée d'un amplificateur 41, couplé lui-même à un amplificateur 44 monté en comparateur à seuil, par l'intermédiaire d'une cellule de retard 42 à résistance capacité, et d'un réseau de rétroaction 43, en sorte qu'à la succession de points imprimés séparés par des intervalles de la neuvième ligne correspondent une succession de signaux rectangulaires en sortie du comparateur 44, les flancs de ces signaux rectangulaires étant légèrement retardés par rapport aux transitions noir-blanc de la neuvième ligne, au cours de la lecture. Le retard est de l'ordre de quelques pourcent de la durée d'exploration d'une colonne à la vitesse de lecture.

Le comparateur 44 attaque par le flanc montant de son signal d'entrée d'activation d'un univibrateur 45 réglé pour une durée d'impulsion supérieure de 10% environ à la durée d'exploration d'une colonne, et par le palier inférieur du signal une entrée de retour à zéro de cet univibrateur 45. La sortie négative de l'univibrateur 45 attaque d'une part la sortie 47 de signal de base de temps, et d'autre par la sortie d'activation d'un second univibrateur 46, réglé pour une durée supérieure de 20% environ à la durée d'exploration d'une colonne, la sortie négative de cet univibrateur attaquant par le flanc arrière montant de son signal l'entrée d'activation de l'univibrateur 45.

Le fonctionnement du dispositif de la figure 4 est explicité par le graphique de la figure 5, où la ligne 50 représente le flux lumineux reçu par le phototransistor 40, la ligne 51 le signal en sortie du comparateur 44, et la ligne 52 le signal sur la sortie 47. On remarquera que la succession rythmée des plages foncées et claires de la ligne 50 se trouve interrompue en 50a par la présence d'une plage foncée intercalaire, et en 50b par la présence d'une plage claire intercalaire, interprétables respectivement par une fausse impression de point, et un raté d'impression.

Les interruptions de rythme 50a et 50b à l'impression se traduisent à la ligne 51 respectivement par un palier haut 51a, et un palier bas 51b de durée triple de celle des paliers normaux.

On a compris que, en l'absence d'anomalies telles que 51a ou 51b, les signaux sur la sortie 47 sont la recopie inversée des signaux issus du comparateur 44, l'univibrateur 45 enclenché par le flanc montant du signal issu de 44 se trouvant bloqué par le palier inférieur suivant de ce signal avant de se déclencher de lui-même. Par contre, dans le cas de l'anomalie 51a, l'univibrateur se déclenche de lui-même, en délivrant le créneau 52a, et enclenchant par le flanc arrière de ce créneau l'univibrateur 46. En fin de période de ce univibrateur, correspondant au créneau 52c, l'univibrateur 45 est enclenché par le flanc arrière de l'impulsion négative délivrée par l'univibrateur 46. Le déclenchement de l'univibrateur 45 sera produit par le comparateur 44 en fin d'anomalie 51a. Dans le cas de l'anomalie 51b, le comparateur 44 manque à enclencher l'univibrateur 45, en raison du remplacement en 50b de la plage noire normale par une plage claire. Aussi l'univibrateur 46 préalablement enclenché par le flanc arrière du créneau délivré par l'univibrateur 45 dans un fonctionnement normal, enclenchera en fin d'impulsion l'univibrateur 45, donnant ainsi naissance au créneau 52b. Au déclenchement autonome de l'univibrateur 45 (créneau 52d) le dispositif est remis en état pour un fonctionnement normal.

Le tracé de la ligne 52 montre clairement que la forme générale de la commande de base de temps de lecture est conservée malgré des défauts locaux d'impression codée, la fluctuation de durée des créneaux reconstitués se situant à 20% en plus ou 30% en moins par rapport à la durée normule des créneaux.

Bien entendu, l'invention n'est pas limitée aux exemples décrits, et bien des variantes pourraient être apportées à la machine à écrire sans sortir pour autant du cadre de l'invention. Notamment l'utilisation d'un code autre que le code A S C I I pour l'enregistrement des signaux en mémoires où l'impression codée ne saurait à l'evidence être exclue.

Par ailleurs toute la logique d'enregistrement en mémoire de double lecture et d'impression a été décrite en réalisation câblee; mais il est évident pour un homme du métier que l'identité fonctionnelle du procédé pourrait être obtenue en utilisant un microprocesseur associé à des mémoires et convenablement programmé pour assurer le rangement en première mémoire des signaux numériques correspondant à la ligne en cours de composition, la lecture en direction de l'afficheur, le transfert en seconde mémoire et les deux lectures successives permettant l'impression graphique et l'impression codée. De plus, les structures d'association du microprocesseur des mémoires et des organes d'interface vers le clavier, l'afficheur et les têtes d'impression, et la constitution du logiciel nécessaire au fonctionnement sont à la portée d'un technicien averti, à partir des enseignements de la présente description sur les fonctions à réaliser.

Enfin l'application du procédé et de la machine à écrire selon l'invention peut s'étendre à la composition de documents commerciaux, pièces comptables et chèques, pour lesquels l'exploitation ultérieure de l'impression des montants numériques, à partir de la pièce originale elle-même présente des avantages évidents.

**Revendications**

1. Procédé de frappe de texte sur une feuille support, avec enregistrement codé conjoint permettant une relecture automatique pour exploitation ultérieure, où l'on enregistre dans une première mémoire une suite limitée de signaux numériques, chacun en correspondance avec un caractère graphique suivant un code de base, la mémoire étant lue en permanence et son contenu affiché en caractères graphiques, on transfère dans une seconde mémoire le contenu de la première en réponse à un signal de fin de suite, et on imprime en graphique le contenu de la seconde mémoire en réponse à une première lecture de la seconde mémoire, procédé caractérisé en ce qu'on imprime en caractères codés en numérique à la suite de l'impression graphique, en réponse à une seconde lecture de la seconde mémoire.

2. Procédé suivant la revendication 1, où la suite limitée correspond à une ligne de texte sur la feuille support, caractérisé en ce que, en réponse au signal de fin de suite, émis en fin de ligne, on déclenche successivement la première lecture de la seconde mémoire, la seconde lecture, et la mise en place de la feuille support pour l'impression de la ligne suivante.

3. Procédé suivant la revendication 1 ou la revendication 2, où le code de base est constitué, par caractère graphique, d'un mot distinct à sept chiffres binaires, plus un chiffre de parité, caractérisé en ce que l'impression en caractères codés comprend, par mot, un alignement de neuf positions de point transversalement à la direction générale de frappe, huit emplacements correspondant respectivement aux huit chiffres binaires du mot respectif, et le neuvième étant occupé alternativement dans la suite par 0 et 1 en sorte de définir une base de rythme de relecture.

4. Machine à écrire, destinée à la frappe de textes avec enregistrement conjoint codé permettant une relecture automatique pour exploitation ultérieure, et comportant un clavier (1) avec des touches de caractères graphiques adaptées à émettre chacune par enfoncement un signal numérique correspondant au caractère auquel la touche est affectée, et des touches de fonction dont au moins une touche de fin de ligne, une première mémoire (3) couplée au clavier et adaptée à enregistrer une suite de signaux numériques dans l'ordre d'émission par les touches de caractères, un afficheur (4) en caractères graphiques couplé à la première mémoire et adapté à afficher le contenu de celle-ci, une seconde mémoire (6) chargée avec le contenu de la première en réponse à un signal émis par la touche de fin de ligne (2) et couplée à un moyen de lecture séquentielle, et un chariot (17) à tête d'impression adapté à se déplacer par avances discrètes suivant une ligne en travers d'une feuille support de texte et à effectuer une impression de ligne en caractères graphiques en réponse à la mise en action dudit moyen de lecture à la suite du chargement de la second mémoire, la fin de lecture déterminant le retour de chariot et l'avance d'un interligne de la feuille support, machine caractérisée en ce que ledit moyen de lecture est adapté, en coopération avec le chariot (17), à effectuer une première lecture traduite par le chariot en caractères graphiques, puis une seconde lecture inscrite par le chariot en code de signal numérique, le retour de chariot et l'avance de la feuille support étant déclenchés par le moyen de lecture en fin de seconde lecture.

5. Machine à écrire selon la revendication 4, caractérisée en ce que ledit chariot comporte au moins une tête d'impression dite mosaïque à lignes et colonnes, associée à une matrice de codage adaptée à appliquer à chaque colonne de la tête d'impression un caractère codé en correspondance avec un signal numérique.

6. Machine à écrire selon la revendication 5, caractérisée en ce que ledit chariot est équipé en outre d'une tête d'impression graphique connue en soi.

7. Machine à écrire selon la revendication 5, caractérisée en ce qu'à la tête d'impression mosaïque est associé en outre un générateur de signaux de commande d'impression graphique connu en soi.

**Patentansprüche**

1. Verfahren zum Schreiben eines Textes auf ein Trägerblatt mit gleichzeitigem kodierten Registrieren, welches ein automatisches Auslesen für eine spätere Verwertung ermöglicht, bei welchem eine begrenzte Folge von numerischen Signalen in einem ersten Speicher registriert wird, von denen jedes einem grafischen Schriftzeichen gemäß einem Basis-Code entspricht, wobei der Speicher permanent gelesen und sein Inhalt in grafischen Schriftzeichen angezeigt wird, der Inhalt des ersten Speichers bei einem Signal für das Ende der Folge in einen zweiten Speicher übertragen wird und der Inhalt des zweiten Speichers bei einem ersten Lesen des zweiten Speichers in grafischen Zeichen geschrieben wird, dadurch gekennzeichnet, daß nachfolgend auf das grafische Schreiben bei einem zweiten Lesen des zweiten Speichers in numerisch kodierten Zeichen geschrieben wird.

2. Verfahren nach Anspruch 1, bei welchem die begrenzte Folge einer Textzeil auf dem Trägerblatt entspricht dadurch gekennzeichnet, daß bei einem am Ende der Zeile ausgesendeten Signal für das Ende der Folge aufeinanderfolgend das erste Lesen des zweiten Speichers, das zweite Lesen und das Anordnen des Trägerblattes für das Schreiben der nachfolgenden Zeile ausgelöst wird.

3. Verfahren nach Anspruch 1 oder 2, bei welchem der Basis-Code pro grafischem Schriftzeichen von einem getrennten Wort mit sieben Binärziffern zuzüglich einer Paritätsziffer gebildet wird, dadurch gekennzeichnet, daß die kodierte Zeichen, je Wort, in einer Zeilenanordnung von neun Punktpositionen quer zur allgemeinen Schreibrichtung geschrieben werden, von denen acht Stellen jeweils acht Binärziffern des zugehörigen Wortes entsprechen, und die neunte Stelle alternativ in der Folge durch 0 und 1 besetzt wird zur Festlegung eines Basisrhythmus für das Wiederauslesen.

4. Schreibmaschine zum Schreiben eines Textes mit gleichzeitigen kodierten Registrieren, welches ein automatisches Auslesen für eine spätere Verwertung ermöglicht, mit einer Tastatur (1), die Tasten für grafische Schriftzeichen, von denen jede bei einem Niederdrücken ein numerisches Signal entsprechend dem der Taste zugeordneten Schriftzeichen aussendet, und Funktionstasten mit wenigstens einer Taste für das Ende der Zeile umfaßt, einem ersten Speicher (3), der mit der Tastatur gekoppelt ist und eine Folge numerischer Signale in der Reihenfolge der Aussendung durch die Schriftzeichentasten speichert, einer Anzeigeeinrichtung (4) für grafische Schriftzeichen, die mit dem ersten Speicher gekoppelt ist, und dessen Inhalt anzeigt, einem zweiten Speicher (6), auf den der Inhalt des ersten Speichers bei einem von der Taste (2) für das Ende der Zeile ausgesendeten Signal übertragen wird, und der mit einer Einrichtung zum sequentiellen Lesen verbunden ist, und einem Wagen (17) mit Schreibkopf, der in diskreten Schritten entlang einer Zeile quer zu einem Textträgerblatt verscheibbar ist, und bei einer Betätigung der Leseeinrichtung nach dem Übertragen auf den zweiten Speicher eine Zeile in grafischen Schriftzeichen schreibt, wobei das Ende des Lesens die Rückführung des Wagens und das Vorschieben des Trägerblattes um eine Zwischenzeile bestimmt, dadurch gekennzeichnet, daß die Leseeinrichtung derart ausgebildet is, daß sie im Zusammenwirken mit dem Wagen (17) ein erstes Lesen, welches durch den Wagen in grafische Schriftzeichen übersetzt wird, und dann ein zweites Lesen, welches durch den Wagen im Code der numerischen Signale niedergeschrieben wird, ausführt, und daß die Rückführung des Wagens und das Vorschieben des Trägerblattes durch die Leseeinrichtung am Ende des zweiten Lesens auslösbar ist.

5. Schreibmaschine nach Anspruch 4, dadurch gekennzeichnet, daß der Wagen wenigstens einen Mosaik-Schreibkopf zum Schreiben eines Mosaiks mit Zeilen und Kolonnen aufweist, der einer Kodierungsmatrix zugeordnet ist, die an jede Kolonne des Schreibkopfes ein entsprechend einem numerischen Signal kodiertes Zeichen anlegt.

6. Schreibmaschine nach Anspruch 5, dadurch gekennzeichnet, daß der Wagen außerdem einen an sich bekannten grafischen Schreibkopf umfaßt.

7. Schreibmaschine nach Anspruch 5, dadurch gekennzeichnet, daß der Mosaik-Schreibkopf außerdem einen Generator für Steuersignale zum grafischen Drucken umfaßt.

## Claims

1. Method for typing text on a support sheet with simultaneous coded recording permitting automatic re-reading for further processing, whereby a limited sequence of numeric signals is recorded in a first memory, each of said signals corresponding to a graphic character according to a basic code, the memory being permanently read and its contents displayed in graphic characters, the contents of the first memory being transferred into a second memory in response to an end-of-sequence signal, and the contents of the second memory being printed in graphic form in response to a first reading of the second memory, the method being characterised in that numeric coded characters are printed following graphic printing, in response to a second reading of the second memory.

2. Method according to Claim 1, whereby the limited sequence corresponds to a line of text on the support sheet, characterised in that, in response to the end-of-sequence signal emitted at the end of a line, first reading of the second memory, second reading, and positioning of the support sheet for printing the next line occur in succession.

3. Method according to Claim 1 or Claim 2, whereby the basic code consists, for each graphic character, of a separate word with seven binary digits, plus a parity digit, characterised in that printing in coded characters comprises, for each word, in an alignment of nine dot positions transversely to the general typing direction, eight positions corresponding respectively to eight binary digits of the respective word, and the ninth position being occupied alternatively in the sequence by 0 and 1 so as to define a basis for the re-reading cycle.

4. Typewriter arranged for typing texts with simultaneous coded recording permitting automatic re-reading for further processing, and comprising a keyboard (1) with graphic character keys each arranged to emit, when depressed, a numeric signal corresponding to the character with which the key is associated, and function keys, at least one of which is an end-of-line key, a first memory (3) coupled to the keyboard and arranged to record a sequence of numeric signals in the order in which they are emitted by the character keys, a graphic character display (4) coupled to the first memory and arranged to display the contents of the latter, a second memory (6) loaded with the contents of the first memory in response to a signal emitted by the end-of-line key (2) and coupled to a sequential reading means, and a carriage (17) with a printing head arranged to move forward in a discontinuous manner along a line across a support sheet of text and to perform printing of a line of graphic characters in response to the actuation of the said reading means following loading of the second memory, the end of reading causing carriage return and one line feed of the support sheet, the typewriter being characterised in that the said reading means is arranged, in cooperation with the carriage (17), to effect a first reading converted by the carriage into graphic characters, then a second reading recorded by the carriage in the numeric signal code, the carriage return and the advance of the support sheet being triggered by the reading means at the end of the second reading.

5. Typewriter according to Claim 4, characterised in that the said carriage comprises at least one so-called line-and-column mosaic printing head associated with a coding matrix arranged to apply to each column of the printing head a coded character corresponding to a numerical signal.

6. Typewriter according to Claim 5, characterised in that the said carriage is also provided with a graphic printing head known per se.

7. Typewriter according to Claim 5, characterised in that the mosaic printing head is also associated with a graphic printing control signal generator known per se.

# FIG.1

# FIG.2

# FIG.3

## FIG.4

## FIG.5